# EUROPÄISCHE PATENTANMELDUNG

(11) **EP 0 791 529 A1**
(43) Veröffentlichungstag der Anmeldung: **27.08.1997**
(21) Anmeldenummer: 97101000.4
(22) Anmeldetag: 23.01.1997
(51) Int. Cl.: B62D 53/08

(54) **Sattelauflager für eine Sattelzugmaschine**

(30) Priorität: 21.02.1996 DE 19606374
(71) Anmelder: Kniep, Thomas, D-57439 Attendorn (DE)
(72) Erfinder: Kniep, Thomas, D-57439 Attendorn (DE)
(74) Vertreter: Selting, Günther, Dipl.-Ing.

(57) **Zusammenfassung**

Das Sattelauflager (13), das die Sattelkupplung (14) trägt, weist zwei Schieber (16,17) auf, die entlang einer Führungsbasis (15) verschiebbar sind. An jedem der Schieber (16,17) ist ein Hebel (18,19) angelenkt, der gelenkig mit der Sattelkupplung (14) verbunden ist. Durch Verschieben des einen Schiebers (16) relativ zu dem anderen Schieber (17) kann das Höhenmaß (HM) der Sattelkupplung (14) verändert werden. Durch gemeinsames Verschieben beider Schieber (16,17) kann das Vormaß (VM) verändert werden.

## Beschreibung

Die Erfindung betrifft ein Sattelauflager für eine Sattelzugmaschine.

Aus EP 0 576 722 B1 ist eine Vorrichtung zur Höhenverstellung des Sattelauflagers einer Sattelzugmaschine bekannt. Diese Vorrichtung ermöglicht es, die Sattelzugmaschine mit Sattelanhängern unterschiedlicher Höhen zu betreiben. Hierzu ist über einer Unterplatte eine Tragplatte montiert, auf der die Sattelkupplung angebracht wird. Die Tragplatte kann mit einer Hubvorrichtung angehoben werden. Im angehobenen Zustand kann sie durch Schwenkorgane, die an der Unterplatte angelenkt sind und hochgeschwenkt werden können, abgestützt werden. Diese Vorrichtung erlaubt nur zwei unterschiedliche Höheneinstellungen der Sattelkupplung.

Der Erfindung liegt die Aufgabe zugrunde, ein Sattelauflager zu schaffen, das mit einer einfachen Konstruktion vielfache Veränderungen des Höhenmaßes der Sattelkupplung ermöglicht.

Die Lösung dieser Aufgabe erfolgt erfindungsgemäß mit den im Patentanspruch 1 angegebenen Merkmalen.

Bei dem erfindungsgemäßen Sattelauflager ist auf einer Führungsbasis, die mit dem Fahrgestell der Sattelzugmaschine fest verbunden wird, mindestens ein Schieber angeordnet, der in Fahrzeuglängsrichtung verschoben werden kann und in unterschiedlichen Positionen arretierbar ist. An dem Schieber ist ein Lenker angelenkt, dessen anderes Ende mit der Sattelkupplung verbunden ist. Ein anderer Lenker ist an der Führungsbasis (vorzugsweise an einem zweiten Schieber) abgestützt. Wird der erste Schieber in der einen Richtung bewegt, wird der Winkel, den die Lenker miteinander bilden, kleiner, wobei die Lenker und mit ihnen die Sattelkupplung hochgestellt werden. Wird der erste Schieber dagegen in der entgegengesetzten Richtung bewegt, wird der von den Lenkern gebildete Winkel vergrößert und die Sattelkupplung abgesenkt. Auf diese Weise kann durch lineares Bewegen des ersten Schiebers die Höhe der Sattelkupplung verändert werden. Eine derartige Höhenverstellung ist praktisch stufenlos oder in sehr kleinen Stufen möglich, in Abhängigkeit davon, ob die Arretierung des Schiebers längs der Führungsbasis stufenlos oder in kleinen Inkrementen möglich ist.

Häufig ist es erwünscht, das Vormaß der Sattelkupplung verändern zu können. Das Vormaß bezeichnet die Stellung der Sattelkupplung in Längsrichtung der Zugmaschine. Wenn jeder der Lenker an einem Schieber angelenkt ist, besteht die Möglichkeit, beide Schieber gemeinsam zu verschieben und dadurch unter Beibehaltung des Höhenmaßes der Sattelkupplung das Vormaß zu verändern.

Die Sattelkupplung ist dem Gewicht des Sattelanhängers ausgesetzt und muß daher starken Belastungen standhalten. Zweckmäßigerweise sind an der Führungsbasis zwei parallele Reihen von Zahnelementen vorgesehen und jeder Schieber greift in eine Reihe von Zahnelementen mit einer Klauenkupplung ein. Die Klauenkupplungen übertragen die auf die Lenker einwirkende Last und leiten diese in die Führungsbasis über. Eine besonders große Lastaufnahme ist dann möglich, wenn jede Klauenkupplung mehrere Kupplungszähne aufweist, die in die Zahnlücken der Zahnelemente greifen.

Die Lenker bestehen vorzugsweise aus Platten, die sich über einen wesentlichen Teil der Breite der Führungsbasis erstrecken. Diese Platten nehmen nicht nur die Gewichtsbelastung der Sattelkupplung auf, sondern auch Seitenkräfte und Verwindungskräfte.

Vorzugsweise sind die Schieber durch eine Längenverstellvorrichtung untereinander verbunden, die rückwirkungsfrei ist. Auf diese Weise ist es möglich, den gegenseitigen Abstand der Schieber zu verändern und fest beizubehalten. Selbst wenn beide Schieber gemeinsam verschoben werden, bleibt infolge der Längenverstellvorrichtung ihr gegenseitiger Abstand gleich.

Im folgenden wird unter Bezugnahme auf die Zeichnungen ein Ausführungsbeispiel der Erfindung näher erläutert.

Es zeigen:
- Fig. 1: eine Seitenansicht eines Sattelfahrzeugs, dessen Sattelzugmaschine mit dem erfindungsgemäßen Sattelauflager ausgestattet ist,
- Fig. 2: eine Draufsicht des Sattelauflagers,
- Fig. 3: eine Seitenansicht aus Richtung der Pfeile III-III von Fig. 2,
- Fig. 4: einen Vertikalschnitt entlang der Linie IV-IV von Fig. 3 und
- Fig. 5: einen Schnitt entlang der Linie V-V von Fig. 4.

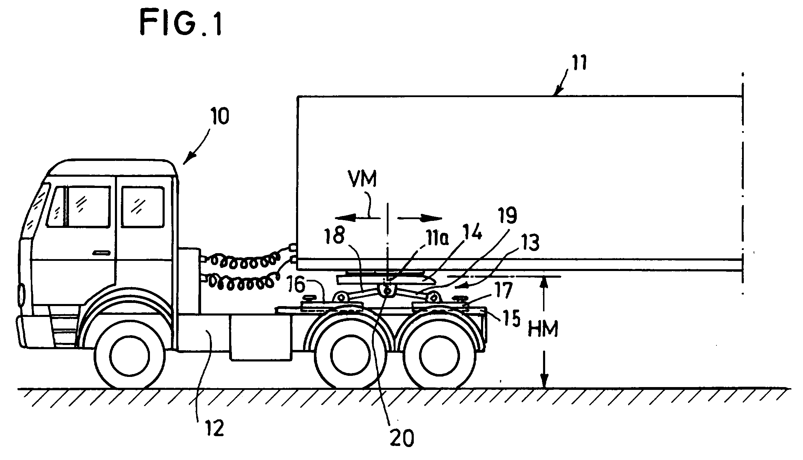

In Fig. 1 ist eine Sattelzugmaschine 10 dargestellt, die mit einem auswechselbaren Sattelaufleger 11 kombiniert ist. Die Sattelzugmaschine 10 besteht aus einem selbstfahrenden Fahrzeug, dessen Fahrgestell 12 das Sattelauflager 13 trägt. Das Sattelauflager 13 weist eine Sattelkupplung 14 in Form einer U-förmigen Scheibe auf, auf der das vordere Ende des Sattelauflegers 11 ruht. In eine Aufnahme der Sattelkupplung 14 greift der vom Boden des Sattelauflegers 11 abstehende Königszapfen 11a ein.

Das nachstehend näher erläuterte Sattelauflager ermöglicht eine Verstellung des Höhenmaßes HM und des Vormaßes VM der Sattelkupplung relativ zu dem Fahrgestell 12.

Auf dem Fahrgestell 12 ist eine Führungsbasis 15 in Form einer starken Platte fest montiert. Auf dieser Führungsbasis 15 sind zwei ebenfalls plattenförmige Schieber 16,17 in Fahrzeuglängsrichtung verschiebbar angebracht. Auf jedem Schieber ist ein Lenker 18,19 gelagert, der um eine horizontale Achse, die in Querrichtung des Fahrzeugs verläuft, schwenkbar ist. Die einander zugewandten anderen Ende der Lenker 18,19 sind entlang einer gemeinsamen Achse 20 unter der Sattelkupplung 14 angelenkt.

Wenn der Schieber 17 seine Position auf der Führungsbasis 15 beibehält und nur der Schieber 16 in Längsrichtung verschoben wird, wird die Sattelkupplung 14 angehoben oder abgesenkt. Werden dagegen beide Schieber 16,17 gemeinsam verschoben, bleibt die Sattelkupplung 14 in ihrer Höhe, jedoch wird das Vormaß VM verändert. Das Anheben und Absenken der Sattelkupplung erfolgt im unbelasteten Zustand, also bei nicht vorhandenem Sattelaufleger 11. Erst wenn die Sattelkupplung in die gewünschte Höhe gebracht worden ist, wird der Sattelaufleger 11 aufgelegt.

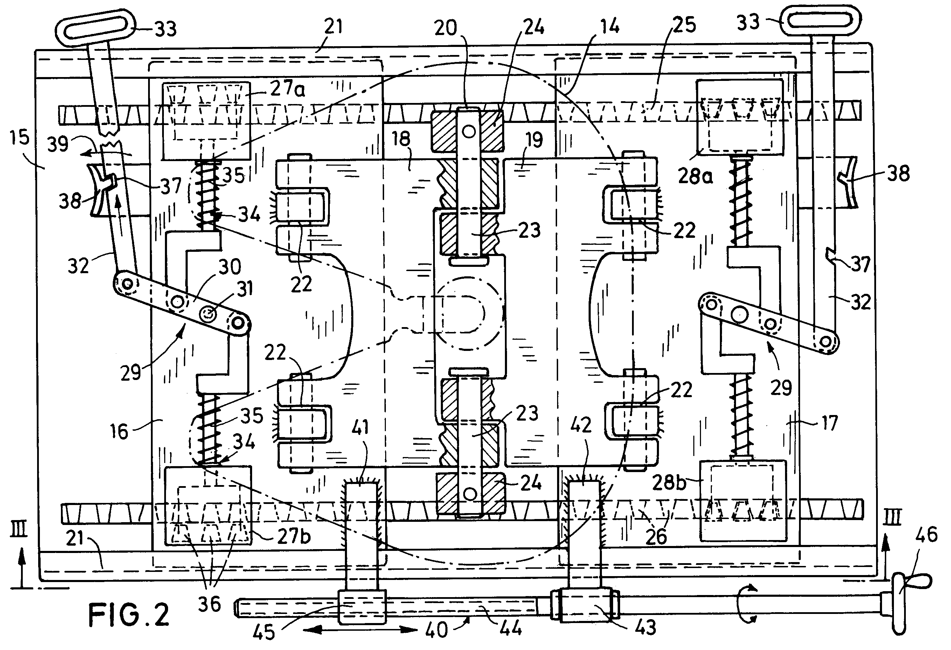

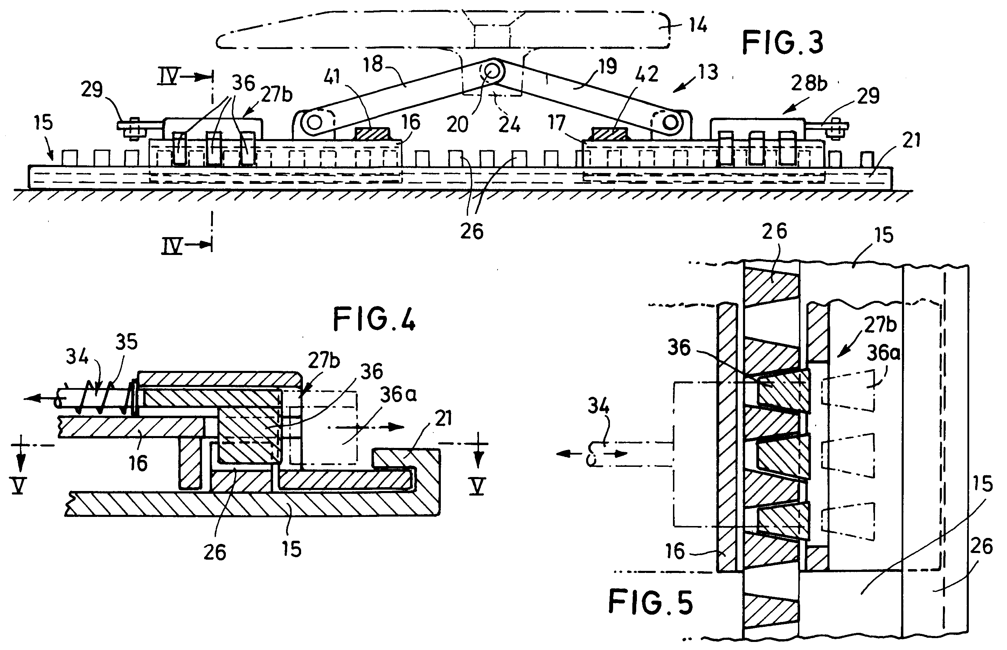

In den Fign. 2 und 3 ist die Führungsbasis 15 dargestellt, bei der es sich um eine langgestreckte rechteckige Platte handelt, die an dem Fahrgestell des Fahrzeugs montiert wird. Diese Platte ist an ihren Längsrändern umgebogen, um längslaufende Führungsschienen 21 zu bilden, in denen die Schieber 15,16 verschiebbar sind. Jeder Schieber 15,16 erstreckt sich über die gesamte Breite der Führungsbasis 15 und wird an seinen Längskanten von den Führungsschienen 21 übergriffen.

Beide Schieber sind linear so geführt, daß sie sich nur vor- und zurückbewegen können.

Jede der Platten 18,19 ist an ihrem unteren Ende durch Gelenke 22 mit horizontaler Achse mit dem zugehörigen Schieber 15 bzw. 16 verbunden. Die Breite der Platten 18,19 in Querrichtung des Fahrzeugs ist größer als die halbe Breite der Führungsbasis 15. An den oberen Querkanten sind die Platten 18,19 durch Gelenkzapfen 23, die auf der gemeinsamen Achse 20 liegen, untereinander gelenkig verbunden. Jeder der Gelenkzapfen 20 ist an einem von der Sattelkupplung 14 nach unten ragenden Halter 24 befestigt.

Parallel zu den Führungsschienen 21 sind auf der Führungsbasis 15 zwei Reihen von Kupplungszähnen 25,26 angeordnet. Zwischen jeweils zwei Kupplungszähnen befindet sich eine Zahnlücke, deren Breite nach außen hin divergiert. Die Kupplungszähne dienen zum Arretieren der Schieber 16,17. Sie wirken mit Klauenkupplungen 27a,27b und 28a,28b zusammen. Die Klauenkupplungen 27a,27b des Schiebers 16 greifen jeweils mit einer Zahnreihe 25,26 zusammen und die Klauenkupplungen 28a,28b des Schiebers 17 greifen ebenfalls mit jeweils einer Zahnreihe zusammen. Die Klauenkupplungen 27a,27b sind durch einen Hebelmechanismus 29 miteinander gekoppelt, der einen bei 31 gelagerten doppelarmigen Hebel 30 aufweist, der durch eine Stange 32 manuell geschwenkt werden kann. Die Stange 32 ist zu diesem Zweck mit einem Handgriff 33 versehen. Die beiden Hebelarme des Hebels 30 sind mit Betätigungselementen 34 gelenkig verbunden, die jeweils quer zum Fahrzeug verschiebbar geführt sind. Jedes Betätigungselement 34 ist durch eine Feder 35 an dem Schieber 16 abgestützt und mit der Klauenkupplung 27a bzw. 27b verbunden. Jede Klauenkupplung weist mehrere (hier: drei) keilförmige Klauenzähne 36 auf, die in die Zahnlücken der Zahnreihen 25,26 passend eindringen können. Durch die Federn 35 werden die Klauenkupplungen 27a,27b im Eingriffszustand (Verriegelungszustand) gehalten. Durch Ziehen an der Stange 32 werden die Kupplungszähne 36 in den ausgerückten Zustand 36a (Fig. 4) gebracht, wobei die Federn 35 gespannt werden. In diesem Zustand sind die beiden Klauenkupplungen 27a,27b, die miteinander synchronisiert sind, ausgekuppelt und der Schieber 16 kann in Längsrichtung verschoben werden.

Um die Klauenkupplungen im entriegelten Zustand arretieren zu können, ist an der Stange 32 eine Rastvorrichtung 37 vorgesehen, die mit einem Halter 38 des Schiebers 16 zusammengreift, wenn die Stange 32 manuell in den Haltezustand verschwenkt wird (Pfeil 39 in Fig. 2).

In gleicher Weise wie die Haltekupplungen 27a,27b des Schiebers 16 sind die Haltekupplungen 28a,28b des Schiebers 17 ausgebildet. Durch Ziehen an der Stange 32 erfolgt eine Entriegelung der beiden zugehörigen Klauenkupplungen. Dieser Entriegelungszustand wird durch die mit dem Halter 38 zusammenwirkende Rastvorrichtung 37 beibehalten, so daß die Person nun beide Hände zur Verfügung hat, um den Schieber zu verschieben. Durch geringfügiges Schwenken der Stange 32 wird die Verriegelung aufgehoben und die Kupplungszähne 36 schnappen durch die Wirkung der Federn 35 in der jeweiligen Zahnreihe 25,26 ein.

Die beiden Schieber 16,17 sind durch eine Längenverstellvorrichtung 40 untereinander verbunden. Diese weist zwei seitlich von den Schiebern abstehende Halter 41,42 auf. An dem Halter 42 ist ein Drehlager 43 befestigt, an dem eine Gewindestange 44 drehbar gelagert und axial abgestützt ist. An dem anderen Halter 41 ist eine Spindelmutter 45 befestigt, in die das Gewinde der Gewindestange 44 eingreift. Durch Drehen eines Handrades 46 wird die Gewindestange 44 gedreht, wodurch die Gewindespindel 45 in axialer Richtung bewegt wird. Dadurch wird der Schieber 16 relativ zu dem Schieber 17 verschoben, so daß sich der gegenseitige Abstand der beiden Schieber verändert. Anstelle des Spindeltriebes kann die Längenverstellvorrichtung auch mit einem anderen Antrieb, z.B. einem Zahnstangentrieb, versehen sein.

Wenn das Höhenmaß HM (Fig. 1) verändert werden soll, wird das Sattelauflager 13 von dem Sattelaufleger 11 entlastet. Dann werden die Klauenkupplungen 27a,27b des Schiebers 16 ausgerückt, während die Klauenkupplungen 28a,28b des Schiebers 17 eingerückt bleiben. Nun kann die Längenverstellvorrichtung 40 betätigt werden, um den Schieber 16 relativ zu dem Schieber 17 horizontal zu bewegen. Dadurch verändert sich die Höhe der Sattelkupplung 17. In der vorgesehenen Endlage werden die Klauenkupplungen 27a,27b durch Freigabe der Stange 32 wieder eingerastet, so daß nunmehr beide Schieber auf der Führungsbasis 15 festgesetzt sind.

Wenn das Vormaß VM verändert werden soll, werden die Klauenkupplungen beider Schieber 16,17 gelöst, was bei aufsitzendem Sattelaufleger 11 geschehen kann. Dann fährt die Sattelzugmaschine 10 ein kurzes Stück vor oder zurück, während der Sattelaufleger 11 stillsteht. Dabei verschieben sich die Schieber unter Beibehaltung ihres gegenseitigen Abstandes längs der Führungsschienen 21. Anschließend werden sämtliche Klauenkupplungen wieder verriegelt, so daß die Schieber auf der Führungsbasis festgesetzt werden.

## Patentansprüche

1. Sattelauflager für eine Sattelzugmaschine (10) mit einer Führungsbasis (15), auf der ein erster Schieber (16) in Längsrichtung verschiebbar und in unterschiedlichen Positionen arretierbar ist, und mit einer Sattelkupplung (14), an der zwei Lenker (18,19) angreifen, von denen einer (18) mit dem ersten Schieber (16) verbunden und der andere (19) an der Führungsbasis (15) abgestützt ist, derart, daß durch Verschieben des ersten Schiebers (16) das Höhenmaß (HM) der Sattelkupplung (14) veränderbar ist.

2. Sattelauflager nach Anspruch 1, dadurch gekennzeichnet, daß der andere Lenker (19) an einem zweiten Schieber (17) angelenkt ist, der zusammen mit dem ersten Schieber (16) in Längsrichtung der Führungsbasis (15) verschiebbar ist, um das Vormaß (VM) der Sattelkupplung (14) zu verändern.

3. Sattelauflager nach Anspruch 2, dadurch gekennzeichnet, daß an der Führungsbasis (15) zwei parallele Reihen von Zahnelementen (25,26) vorgesehen sind, und daß jeder Schieber (16,17) zwei miteinander gekoppelte, mit den Zahnelementen zusammenwirkende Klauenkupplungen (27a,27b;28a,28b) aufweist.

4. Sattelauflager nach Anspruch 3, dadurch gekennzeichnet, daß jede Klauenkupplung mehrere in die Zahnlücken der Zahnelemente eingreifende Kupplungszähne (36) aufweist.

5. Sattelauflager nach Anspruch 3 oder 4, dadurch gekennzeichnet, daß die Klauenkupplungen (27a,27b;28a,28b) in den Verriegelungszustand vorgespannt und im entriegelten Zustand arretierbar sind.

6. Sattelauflager nach einem der Ansprüche 1-5, dadurch gekennzeichnet, daß die Lenker (18,19) aus Platten bestehen, die an ihrem einen Rand gelenkig mit dem zugehörigen Schieber (16,17) und an ihrem gegenüberliegenden Rand gelenkig mit der Sattelkupplung (14) verbunden sind.

7. Sattelauflager nach einem der Ansprüche 1-6, dadurch gekennzeichnet, daß die Lenker (18,19) entlang einer gemeinsamen Gelenkachse (20) an der Sattelkupplung (14) angreifen.

8. Sattelauflager nach einem der Ansprüche 2-7, dadurch gekennzeichnet, daß die Schieber (16,17) durch eine Längenverstellvorrichtung (40) untereinander verbunden sind.

9. Sattelauflager nach einem der Ansprüche 2-8, dadurch gekennzeichnet, daß die Schieber (16,17) aus Platten bestehen, die zwischen längslaufenden Führungsschienen (21) der Führungsbasis (15) geführt sind.
